# EUROPEAN PATENT SPECIFICATION

(11) **EP 1 754 953 B1**
(45) Date of publication and mention of the grant of the patent: **09.01.2013**
(21) Application number: 06254174.3
(22) Date of filing: 08.08.2006
(51) Int. Cl.: G01C 19/56

(54) **Ring resonator gyroscope with cylindrical ring suspension**
Ringresonatorkreisel mit Zylinderringaufhängung
Gyroscope de résonateur à bague avec suspension de bague cylindrique

(30) Priority: 08.08.2005 US 706608
(43) Date of publication of application: 21.02.2007
(73) Proprietor: Northrop Grumman Guidance and Electronics Company, Inc., Woodland Hills, CA 91367 (US)
(72) Inventor: Stewart, Robert E., Woodland Hills, CA 91364 (US)
(74) Representative: Mackenzie, Andrew Bryan

(56) References cited:
- EP-A- 0 623 807
- GB-A- 2 061 502
- US-A- 4 655 081
- US-A1- 2004 055 381

## Description

### BACKGROUND

An electromechanical system in one example measures a parameter. The electromechanical system may comprise a micro-electromechanical system ("MEMS") accelerometer or gyroscope that measures the parameter. For example, the accelerometer measures an acceleration and the gyroscope measures an angular rate (e.g., rotation). The gyroscope in one example comprises a vibrating ring with high Q degenerate fundamental modes of vibration. For example, high Q vibrating rings require little energy to sustain vibration. The vibrating ring in one example is employable for high performance closed loop angular rate sensing. The vibrating ring in another example is employable for lower performance open loop angular rate sensing. The mathematical model of the symmetrical vibrating ring is in many aspects similar to a vibrating ring or hemispherical resonator gyroscope ("HRG"). The analytical similarity to the hemispherical resonator gyroscope indicates that the vibrating ring gyroscope has the potential of achieving similar performance.

Drive components coupled with the vibrating ring cause a first oscillation of the vibrating ring. An angular rate of the vibrating ring and the first oscillation induce a Coriolis force on the vibrating ring. For example, the angular rate is about the longitudinal axis of the vibrating ring. The Coriolis force causes a second oscillation of the vibrating ring. The second oscillation is substantially perpendicular to the first oscillation. Feedback components in one example provide feedback on a magnitude of the first oscillation to the drive components for regulation of the first oscillation. Pickoff sensor components sense the second oscillations and apply control signals to null the pickoff signal. The control signals are a measure of the magnitude and polarity of the angular rate of the vibrating ring.

Small, low cost, low power navigation-grade inertial systems are needed to enable new applications such as personal navigation of individual soldiers and the guidance and control of air, ground and under water autonomous vehicles in GPS denied environments. Ivlicro-electro-mechanical systems inertial systems are currently in development that promise to provide small, low cost, low power inertial systems for tactical grade applications such as guided munitions. Current tactical-grade MEMS inertial systems have gyro bias uncertainty in the range of 20-50 degrees per hour and angle random walk of 0.02 degrees per root hour. Future, small, low cost, low power navigation-grade inertial systems require lower gyro bias uncertainty and angle random walk.

Currently, a manufacturer of inertial sensors performs calibration of the inertial sensors with thermal modeling at a system level. The inertial system performance may be limited by one or more of: instability of the inertial sensors' bias and scale factor, non-repeatability of the thermal model, or hysteretic and thermal gradient induced errors that can not be modeled.

U.S. Patent Application Pub. No. 2004/055381 discloses a planar mechanical resonator for sensing motion of the inertial sensor and a case for housing the resonator. The resonator is supported by a central rigid stem. European Patent EP-A-0 623 807 discloses a ring portion for a vibratory gyroscope. The ring is supported by a central support and radial compliant spokes.

### SUMMARY

The invention in one implementation encompasses a ring resonator gyro. The ring resonator gyro comprises a cylindrical ring suspension that supports a cylindrical ring resonator. The cylindrical ring resonator is coupled with an outer perimeter of the cylindrical ring suspension.

Another implementation of the invention encompasses a method. A cylindrical hole is etched through a first silicon wafer. A first oxide layer is grown on a surface of the first silicon wafer. A second silicon wafer is bonded underneath the first silicon wafer. The second silicon wafer patterned and etched through to the first oxide layer of the first silicon wafer to define a sealing ring, a plurality of drive/sense electrodes, and a cylindrical ring resonator. The second silicon wafer is etched through using the cylindrical hole as a mask, A third silicon wafer is bonded above the first silicon wafer. A native oxide from the second and third silicon wafers that is exposed in the cylindrical hole is removed. A layer of epi-poly silicon is deposited to form a cylindrical ring suspension. The first, second, and third silicon wafers are planarized to remove the epi-poly silicon from a surface of the third silicon wafer. The cylindrical ring resonator and side wall of the cylindrical ring suspension are released using an oxide etch. A fourth silicon wafer is bonded underneath the first silicon wafer. A plurality of feedthru vias are patterned and etched through the fourth silicon wafer to expose contact areas on the plurality of drive/sense electrodes. A plurality of metal electrodes are deposited to form ohmic contacts to the plurality of drive/sense electrodes through the feedthru vias.

### DESCRIPTION OF THE DRAWINGS

Features of example implementations of the invention will become apparent from the description, the claims, and the accompanying drawings in which:
FIG. 1 is a representation of an exploded, perspective view of one implementation of an apparatus that comprises a ring resonator gyro.
FIG. 2 is a representation of a side view of the ring resonator gyro of FIG. 1.

### DETAILED DESCRIPTION

A navigation-grade inertial system in one example comprises relatively lower performance gyroscopes configured in a "self-calibrating" inertial system. In a further example, the inertial system is configured such that all of the inertial sensors lie in a single plane. This configuration does not require a sensor mounting block to orient the sensors to form an orthogonal three axis coordinate frame and does not require out-of-plane interconnections.

The self-calibration of the sensors in one example allows for an increase in accuracy of navigation grade inertial sensors by an order of magnitude without the use of a global positioning system (GPS). In a further example, the self-calibration of the sensors reduces gyro bias performance requirements of the sensors by two orders of magnitude for miniature, low power, low cost navigation-grade inertial systems.

To maintain the "self-calibrating" feature, a Z axis gyro in one example is a Class II Coriolis vibratory gyro, such as a vibrating ring gyro. The hemispheric resonator gyro (HRG) is an example of this class of gyro. Current HRGs, while demonstrating navigation-grade performance, do not satisfy the low cost requirement.

A low cost MEMS equivalent of the hemispheric resonator gyro (HRG) in one example may be operated in a self-calibrating mode and when integrated with a planar accelerometer and vibrating ring gyro in one example will form a very low cost, low power navigation-grade inertial system.

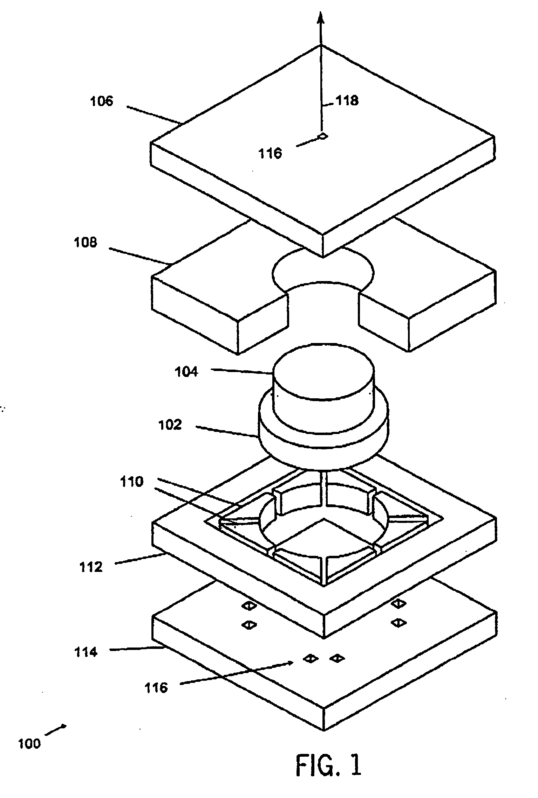

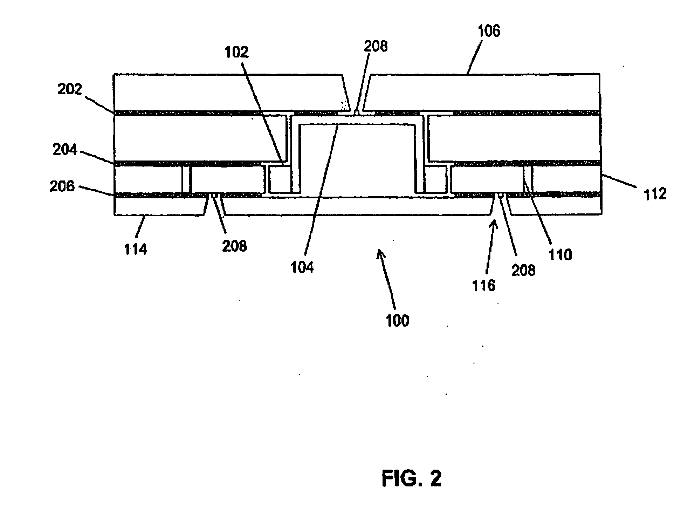

Figure 1 is an exploded view of one implementation of a ring resonator gyro 100. The ring resonator 102 in one example comprises a cylindrical ring with a rectangular crossection. The ring resonator 102 is supported by a ring suspension 104, for example, a thin-walled cup or cylindrical ring suspension. The ring suspension 104 is attached mechanically to the top cover 106. The spacer 108 is bonded to the top cover 106 with an intervening dielectric layer 202 (dielectric layers are not shown Figure 1). The spacer 108 surrounds the ring suspension 104 and is bonded to and supports the drive/sense electrodes 110 and sealing ring 112 with an intervening dielectric layer 204. The bottom cover 114 is bonded to the drive/sense electrodes 110 and sealing ring 112 with an intervening dielectric layer 206. Vias 116 are etched in bottom cover 114 and dielectric layer 206 to access the drive/sense electrodes 110. Figure 2 is a crossection of the ring resonator gyro 100.

The ring resonator 102 in one example differs from other vibrating ring gyros concepts in one or more of: the design of the suspension, the high aspect ratio and high inertia of the ring, the options of interchanging the drive and sense modes of operation, and steering of the drive axis to coincide with the principal damping axis and/or control of the principal elastic axis to coincide with the drive axis.

In figure 2 the dielectric layers 202, 204, and 206 are shown extending inward from the outside edges of the device. The dielectric layers 202, 204, and 206 are etched away around the ring resonator 102 and ring suspension 104 to provide mechanical freedom for the ring resonator 102. The ring in one example is driven into resonance at its fundamental mode by two drive electrodes applying an electrostatic force at the resonant frequency at the plus antinodes of the vibration pattern. A drive pickoff signal is generated at the minus antinodes. The sense electrodes are at the plus nodes of the vibration pattern while the forcer electrodes are at the minus nodes. When an angular rate is applied, Coriolis forces couple vibration into the nodal points and generate a signal in the sense electrodes. A servo loop applies voltages to the forcer electrodes to null the displacement at the nodes of the vibration pattern. The forcer voltage is proportional to the angular rate applied about the axis 118 perpendicular to the plane of the ring resonator 102.

The following fabrication sequence describes example steps to fabricate a single ring resonator sensor chip. Multiple chips may be fabricated using silicon wafers. The number of chips will depend on the wafer diameter.
1. Using deep reaction etching such as the Bosch process etch a hole (for example, a 2mm diameter hole) through a single crystal silicon wafer with a 111 crystal orientation. This, the spacer wafer, is designated wafer B. The silicon wafer in one example is 1mm thick. The size of the hole and thickness of the wafer may be adjusted for different performance goals.
2. Grow 2 µm of SiO₂ on all surfaces of the spacer wafer.
3. Bond a 500 µm silicon wafer with a 111 crystal orientation to the spacer wafer. This, the ring resonator, drive/sense electrodes and sealing ring wafer, is designated wafer C.
4. Pattern and etch through wafer C to the oxide layer on wafer B to define the drive/sense electrodes 110 and sealing ring 112.
5. Using the oxided hole pattern in the spacer B as a mask, etch through wafer C.
6. Bond a 500 µm silicon wafer with a 111 crystal orientation to the opposite side of wafer A. This, the top cover wafer, is designated wafer A.
7. Remove the native oxide from wafer A and C that is exposed in the cavity formed by wafer B. Using an epitaxial silicon reactor, deposit 10 µm of epi-poly silicon to form the ring suspension 104.
8. Planarize the ABC wafer stack to remove the epi-poly silicon from the surface of the C wafer.
9. Release the ring resonator 102 and side wall of the ring suspension 104 using an oxide etch.
10. Bond a 500 µm silicon wafer with a 111 crystal orientation and a 2 µm oxide layer to the C wafer side of the ABC wafer stack. This, the bottom cover wafer, is designated wafer D.
11. Pattern and etch feedthru vias 116 through wafers A and D and the oxide layer to expose contact areas on the drive/sense electrodes 110.
12. Deposit aluminum metal electrodes using a shadow mask and anneal to form ohmic contacts 208 to the drive/sense electrodes 110.

The electronics to operate the ring resonator gyro 100 in one example are identical to that used to operate a hemispheric resonator gyro except for the changes necessary to accommodate the difference in resonant frequency and pickoff and forcer scaling.

## Claims

1. A ring resonator gyro (100), comprising:
a top cover (106) formed from a first silicon wafer;
a spacer (108), formed from a second silicon wafer coupled with the top cover and located underneath the top cover, wherein the spacer comprises a cylindrical hole that is normal to a plane of the spacer;
a cylindrical ring resonator (102) formed from a third silicon wafer coupled with the spacer and located underneath the spacer,
a cylindrical ring suspension (104) that supports the cylindrical ring resonator (102) and is mechanically attached to the top cover;
wherein the cylindrical ring suspension is formed from a layer of epi-poly silicon deposited within the cylindrical hole; and
wherein the cylindrical ring resonator (102) is coupled with an outer perimeter of the cylindrical ring suspension (104).

2. The ring resonator gyro (100) of claim 1, wherein the top cover, the spacer, the cylindrical ring suspension (104), and the cylindrical ring resonator (102) form a micro-electromechanical system, MEMS.

3. The ring resonator gyro (100) of claim 1, further comprising:
a plurality of electrodes (110), formed from the third silicon wafer and located around an outer perimeter of the cylindrical ring resonator (102);
a sealing ring (112), formed from the third silicon wafer and located around an outer perimeter of the plurality of electrodes (110);
a bottom cover (114), formed from a fourth silicon wafer and coupled with the plurality of electrodes (110) and the sealing ring (112).

4. The ring resonator gyro (100) of claim 3, wherein the layer comprises a ten micrometer deposit of epi-poly silicon.

5. The ring resonator gyro (100) of claim 3, wherein the cylindrical ring resonator (102) comprises a rectangular cross section.

6. The ring resonator gyro (100) of claim 3, wherein the spacer (108) is bonded to the top cover (106) with an intervening first dielectric layer.

7. The ring resonator gyro (100) of claim 6, wherein the spacer (108) is bonded to the plurality of electrodes (110) and the sealing ring (112) with an intervening second dielectric layer.

8. The ring resonator gyro (100) of claim 7, wherein the bottom cover (114) is bonded to the plurality of electrodes (110) and the sealing ring (112) with an intervening third dielectric layer.

9. The ring resonator gyro (100) of claim 8, wherein the bottom cover (114) and the intervening third dielectric layer comprise a plurality of vias for electrical contact with the plurality of electrodes (110).

10. The ring resonator gyro (100) of claim 8, wherein the first, second, and third dielectric layers are etched away around the cylindrical ring resonator (102) and sidewalls of the cylindrical ring suspension (104) to provide mechanical freedom for the cylindrical ring resonator (102).

11. The ring resonator gyro (100) of claim 3, wherein the plurality of electrodes (110) comprise one or more drive electrodes;
wherein the one or more drive electrodes apply an electrostatic force to the cylindrical ring resonator (102) at a resonant frequency;
wherein the one or more drive electrodes apply the electrostatic force to the cylindrical ring resonator (102) at plus antinodes of a vibration pattern of the cylindrical ring resonator (102) to drive the ring resonator (102) into resonance at a fundamental mode.

12. The ring resonator gyro (100) of claim 11, wherein the plurality of electrodes (110) comprise one or more sense electrodes and one or more forcer electrodes;
wherein the one or more sense electrodes are located at plus nodes of the vibration pattern of the cylindrical ring resonator (102);
wherein the one or more sense electrodes sense a Coriolis force vibration in nodal points of the cylindrical ring resonator (102);
wherein the one or m ore forcer electrodes are located at minus nodes of the vibration pattern of the cylindrical ring resonator (102);
wherein the one or more forcer electrodes receive from a servo loop a voltage that is proportional to an angular rate applied about an input axis that is coaxial with the cylindrical ring resonator (102);
wherein the one or more forcer electrodes employ the voltage to null displacement at one or more nodes of the vibration pattern.

13. The ring resonator gyro (100) of claim 3,
wherein the first, second, third, and fourth silicon wafers comprise silicon wafers with a "111" crystal orientation.

14. A method for manufacture of a ring resonator gyro (100), comprising the steps of:
etching a cylindrical hole through a first silicon wafer to form a spacer (108);
growing a first oxide layer (202,204) on a surface of the first silicon wafer;
bonding a second silicon wafer (102, 110, 112) underneath the first silicon wafer;
patterning and etching through the second silicon wafer to the first oxide layer (204) of the first silicon wafer to define a sealing ring (112), a plurality of drive/sense electrodes (110), and a cylindrical ring resonator (102);
etching through the second silicon wafer using the cylindrical hole as a mask;
bonding a third silicon wafer (106) above the first silicon wafer;
removing a native oxide from the second and third silicon wafers that is exposed in the cylindrical hole;
**characterized by** the steps of:
depositing a layer of epi-poly silicon within the cylindrical hole to form a cylindrical ring suspension (104)wherein the cylindrical ring resonator is coupled with an outer perimeter of the cylindrical ring suspension;
planarizing the first, second, and third silicon wafers to remove the layer of epi-poly silicon from a surface of the third silicon wafer;
releasing the cylindrical ring resonator (102) and side wall of the cylindrical ring suspension (104) using an oxide etch;
bonding a fourth silicon wafer (114) underneath the first silicon wafer;
patterning and etching a plurality of feedthru vias (116) through the third and fourth silicon wafers to expose contact areas on the cylindrical ring suspension (104) and the plurality of drive/sense electrodes (110);
depositing a plurality of metal electrodes (110) to form ohmic contacts (208) to the cylindrical ring suspension and the plurality of drive/sense electrodes through the feedthru vias.

15. The method of claim 14, wherein the step of etching the cylindrical hole through the first silicon wafer comprises the step of:
etching the cylindrical hole through employment of a deep reaction etching process.

16. The method of claim 14, wherein the step of depositing the layer of epi-poly silicon to form the cylindrical ring suspension (104) comprises the step of:
depositing the layer of epi-poly silicon through employment of an epitaxial silicon reactor to form the cylindrical ring suspension (104), wherein the layer of epi-poly silicon is approximately ten micrometers thick.

17. The method of claim 14, wherein the step of depositing the plurality of metal electrodes (110) to form ohmic contacts to the plurality of drive/sense electrodes comprises the step of:
depositing the metal electrodes using a shadow mask and anneal.

18. The method of claim 14, wherein the fourth silicon wafer comprises a second oxide layer, wherein the step of patterning and etching the plurality of feedthru vias through the fourth silicon wafer to the expose contact areas on the plurality of drive/sense electrodes comprises the step of:
patterning and etching the plurality of feedthru vias through the first and fourth silicon wafer and the outer oxide layer to expose the contact areas on the cylindrical ring suspension (104) and the plurality of drive/sense electrodes.

19. The method of claim 14, wherein the step of growing the first oxide layer on a surface of the first silicon wafer comprises the step of:
growing a two micrometer thick layer of silicon dioxide on all surfaces of the first silicon wafer.

## Patentansprüche

1. Ringresonatorkreisel (100) mit:
einer oberen Abdeckung (106), die aus einer ersten Siliziumscheibe gebildet ist,
einem Abstandsstück (108), das aus einer zweiten Siliziumscheibe gebildet ist, die mit der oberen Abdeckung verbunden ist und unterhalb der oberen Abdeckung liegt, wobei das Abstandsstück eine zylindrische Öffnung aufweist, die unter einem rechten Winkel zur Ebene des Abstandsstückes steht,
einem zylindrischen Ringresonator (102), der aus einer dritten Siliziumscheibe gebildet und mit dem Abstandsstück verbunden ist und unter dem Abstandsstück liegt,
einer zylindrischen Ringaufhängung (104), die den zylindrischen Ringresonator (102) haltert und mechanisch an der oberen Abdeckung angebracht ist,
wobei die zylindrische Ringaufhängung aus einer Schicht aus epi-Polysilizium gebildet ist, die in der zylindrischen Öffnung abgeschieden ist, und
wobei der zylindrische Ringresonator (102) mit einem Außenumfang der zylindrischen Ringaufhängung (104) gekoppelt ist.

2. Ringresonatorkreisel (100) nach Anspruch 1, bei dem die obere Abdeckung, das Abstandsstück, die zylindrische Ringaufhängung (104) und der zylindrische Ringresonator (102) ein mikro-elektromechanisches System, MEMS, bilden.

3. Ringresonatorkreisel (100) nach Anspruch 1, der weiterhin
eine Anzahl von Elektroden (110), die aus der dritten Siliziumscheibe gebildet sind und um einen Außenumfang des zylindrischen Ringresonators (102) liegen,
einen Dichtungsring (112), der aus der dritten Siliziumscheibe gebildet ist und um einen Außenumfang der Anzahl von Elektroden (110) herum liegt;
eine untere Abdeckung (114) umfasst, die aus einer vierten Siliziumscheibe gebildet ist und mit der Anzahl von Elektroden (110) und dem Dichtungsring (112) gekoppelt ist.

4. Ringresonatorkreisel (100) nach Anspruch 3, bei dem die Schicht eine 10 Mikrometer dicke Abscheidung von epi-Polysilizium umfasst.

5. Ringresonatorkreisel (100) nach Anspruch 3, bei dem der zylindrische Ringresonator (102) einen rechtwinkligen Querschnitt aufweist.

6. Ringresonatorkreisel (100) nach Anspruch 3, bei dem das Abstandsstück (108) mit der oberen Abdeckung (106) über eine dazwischenliegende erste dielektrische Schicht durch Bonden verbunden ist.

7. Ringresonatorkreisel (100) nach Anspruch 6, bei dem das Abstandsstück (108) mit der Anzahl von Elektroden (110) und dem Dichtungsring (112) über eine zwischenliegende zweite dielektrische Schicht durch Bonden verbunden ist.

8. Ringresonatorkreisel (100) nach Anspruch 7, bei dem die untere Abdeckung (114) mit der Anzahl von Elektroden (110) und dem Dichtungsring (112) über eine zwischenliegende dritte dielektrische Schicht durch Bonden verbunden ist.

9. Ringresonatorkreisel (100) nach Anspruch 8, bei dem die untere Abdeckung (114) und die zwischenliegende dritte dielektrische Schicht eine Anzahl von Durchkontaktierungen für einen elektrischen Kontakt mit der Anzahl von Elektroden (110) umfassen.

10. Ringresonatorkreisel (100) nach Anspruch 8, bei dem die ersten, zweiten und dritten dielektrischen Schichten um den zylindrischen Ringresonator (102) herum und Seitenwänden der zylindrischen Ringaufhängung (104) herum fortgeätzt sind, um eine mechanische Freiheit für den zylindrischen Ringresonator (102) zu schaffen.

11. Ringresonatorkreisel (100) nach Anspruch 3, bei dem die Anzahl von Elektroden (110) ein oder mehrere Treiber-Elektroden umfasst,
wobei die eine oder mehrere Treiber-Elektroden eine elektrostatische Kraft auf den zylindrischen Ringresonator (102) bei einer Resonanzfrequenz anlegen;
wobei die eine oder mehrere Treiber-Elektroden die elektrostatische Kraft an den zylindrischen Ringresonator (102) am Plus-Schwingungsbauch eines Schwingungsmusters des zylindrischen Ringresonators (102) anlegen, um den Ringresonator (102) bei einer Grund-Mode in Resonanz anzutreiben.

12. Ringresonatorkreisel (100) nach Anspruch 11, bei dem die Anzahl von Elektroden (110) ein oder mehrere Sensor-Elektroden und eine oder mehrere Kraftausübungs-Elektroden umfasst,
wobei die eine oder mehrere Sensor-Elektroden am Plus-Knoten des Schwingungsmusters des zylindrischen Ringresonators (102) angeordnet sind;
wobei die eine oder mehrere Sensor-Elektroden eine Coriolis-Kraft-Schwingung in Knotenpunkten des zylindrischen Ringresonators (102) messen;
wobei die eine oder mehrere Kraftausübungs-Elektroden an Minus-Knoten des Schwingungsmusters des zylindrischen Ringresonators (102) angeordnet sind;
wobei eine oder mehrere Kraftausübungs-Elektroden von einer Servoschleife eine Spannung empfangen, die proportional zu einer Winkelgeschwindigkeit ist, die um eine Eingangsachse wirkt, die koaxial zu dem zylindrischen Ringresonator (102) ist,
wobei die eine oder mehrere Kraftausübungs-Elektroden die Spannung dazu verwenden, die Bewegung an einem oder mehreren Knoten des Schwingungsmusters zu Null zu machen.

13. Ringresonatorkreisel (100) nach Anspruch 3, bei dem die ersten, zweiten, dritten und vierten Siliziumscheiben Siliziumscheiben mit einer "111"-Kristallausrichtung umfassen.

14. Verfahren zur Herstellung eines Ringresonatorkreisels (100) mit den folgenden Schritten:
Ätzen einer zylindrischen Öffnung durch eine erste Siliziumscheibe zur Bildung eines Abstandsstückes (108);
Aufwachsen einer ersten Oxidschicht (202, 204) auf eine Oberfläche der ersten Siliziumscheibe;
Befestigen einer zweiten Siliziumscheibe (102, 110, 112) durch Bonden unterhalb der ersten Siliziumscheibe;
Musterbildung und Ätzen durch die zweite Siliziumscheibe hindurch bis zur ersten Oxidschicht (204) der ersten Siliziumscheibe zur Bildung eines Dichtungsringes (12), einer Anzahl von Treiber-/Sensor-Elektroden (110) und eines zylindrischen Ringresonators (102);
Ätzen durch die zweite Siliziumscheibe hindurch unter Verwendung der zylindrischen Öffnung als Maske;
Befestigen einer dritten Siliziumscheibe (106) durch Bonden oberhalb der ersten Siliziumscheibe;
Entfernen eines nativen Oxids, das in der zylindrischen Öffnung freiliegt, von den zweiten und dritten Siliziumscheiben;
**gekennzeichnet durch** die folgenden Schritte:
Abscheiden einer Schicht aus epi-Polysilizium innerhalb der zylindrischen Öffnung zur Bildung einer zylindrischen Ringaufhängung (104), wobei der zylindrische Ringresonator mit einem Außenumfang der zylindrischen Ringaufhängung gekoppelt wird;
Einebnen der ersten, zweiten und dritten Siliziumscheiben zur Entfernung der Schicht von Epi-Polysilizium von einer Oberfläche der dritten Siliziumscheibe;
Lösen des zylindrischen Ringresonators (102) und der Seitenwand der zylindrischen Ringaufhängung (104) unter Verwendung einer Oxid-Ätzung;
Befestigen einer vierten Siliziumscheibe (114) **durch** Bonden unterhalb der ersten Siliziumscheibe;
Musterbildung und Ätzen einer Anzahl von Durchkontaktierungen (116) durch die dritten und vierten Siliziumscheiben hindurch, um Kontaktbereiche auf der zylindrischen Ringaufhängung (104) und eine Vielzahl von Treiber-/Sensor-Elektroden (110) freizulegen;
Abscheiden einer Anzahl von Metallelektroden (110) zur Bildung von ohm'schen Kontakten (208) an die zylindrische Ringaufhängung und die Anzahl von Treiber-/Sensor-Elektroden **durch** die Durchkontaktierungen hindurch.

15. Verfahren nach Anspruch 14, bei dem der Schritt des Ätzens der zylindrischen Öffnung durch die erste Siliziumscheibe den Schritt des:
Ätzens der zylindrischen Öffnung unter Verwendung eines tiefen Reaktions-Ätzprozesses umfasst.

16. Verfahren nach Anspruch 14, bei dem der Schritt des Abscheidens der Schicht von epi-Polysilizium zur Bildung der zylindrischen Ringaufhängung (104) den Schritt des:
Abscheidens der Schicht von epi-Polysilizium durch die Verwendung eines Epitaxial-Silizium-Reaktors zur Bildung der zylindrischen Ringaufhängung (104) umfasst, wobei die Schicht aus epi-Polysilizium angenähert 10 Mikrometer dick ist.

17. Verfahren nach Anspruch 14, bei dem der Schritt des Abscheidens der Anzahl von Metallelektroden (110) zur Bildung ohm'scher Kontakte an die Anzahl von Treiber-/Sensor-Elektroden den Schritt des:
Abscheidens der Metallelektroden unter Verwendung einer Schattenmaske und eines Temperns umfasst.

18. Verfahren nach Anspruch 14, bei dem die vierte Siliziumscheibe eine zweite Oxidschicht umfasst, wobei der Schritt der Musterbildung und des Ätzens der Anzahl von Durchkontaktierungen durch die vierte Siliziumscheibe zum Freilegen von Kontaktbereichen auf der Anzahl von Treiber-/Sensor-Elektroden den Schritt der:
Musterbildung und des Ätzens der Anzahl von Durchkontaktierungen durch die erste und vierte Siliziumscheibe und die äußere Oxidschicht hindurch umfasst, um die Kontaktbereiche auf der zylindrischen Ringaufhängung (104) und die Anzahl der Treiber-/Sensor-Elektroden freizulegen.

19. Verfahren nach Anspruch 14, bei dem der Schritt des Aufwachsens der ersten Oxidschicht auf eine Oberfläche der ersten Siliziumscheibe den Schritt des:
Aufwachsens einer 2 Mikrometer dicken Schicht aus Siliziumdioxid auf alle Oberflächen der ersten Siliziumscheibe umfasst.

## Revendications

1. Gyroscope de résonateur à bague (100) comprenant:
un couvercle supérieur (106) formé à partir d'une première tranche de silicium;
un dispositif d'espacement (108) formé à partir d'une deuxième tranche de silicium couplée avec le couvercle supérieur et positionné au-dessous du couvercle supérieur, dans lequel le dispositif d'espacement comprend un trou cylindrique qui est normal à un plan du dispositif d'espacement;
un résonateur à bague cylindrique (102) formé à partir d'une troisième tranche de silicium couplée avec le dispositif d'espacement et positionné au-dessous du dispositif d'espacement;
une suspension de bague cylindrique (104) qui supporte le résonateur à bague cylindrique (102) et est mécaniquement fixée au couvercle supérieur;
dans lequel la suspension de bague cylindrique est formée à partir d'une couche de polysilicium épitaxié déposée à l'intérieur du trou cylindrique; et
dans lequel le résonateur à bague cylindrique (102) est couplé avec un périmètre externe de la suspension de bague cylindrique (104).

2. Gyroscope de résonateur à bague (100) selon la revendication 1, dans lequel le couvercle supérieur, le dispositif d'espacement, la suspension de bague cylindrique (104) et le résonateur à bague cylindrique (102) forment un système micro-électromécanique, MEMS.

3. Gyroscope de résonateur à bague (100) selon la revendication 1, comprenant en outre:
une pluralité d'électrodes (110) formées à partir de la troisième tranche de silicium et positionnées autour d'un périmètre externe du résonateur à bague cylindrique (102);
une bague d'étanchéité (112) formée à partir de la troisième tranche de silicium et positionnée autour d'un périmètre externe de la pluralité d'électrodes (110);
un couvercle inférieur (114) formé à partir d'une quatrième tranche de silicium et couplé avec la pluralité d'électrodes (110) et la bague d'étanchéité (112).

4. Gyroscope de résonateur à bague (100) selon la revendication 3, dans lequel la couche comprend un dépôt de dix micromètres de polysilicium épitaxié.

5. Gyroscope de résonateur à bague (100) selon la revendication 3, dans lequel le résonateur à bague cylindrique (102) comprend une section transversale rectangulaire.

6. Gyroscope de résonateur à bague (100) selon la revendication 3, dans lequel le dispositif d'espacement (108) est lié au couvercle supérieur (106) avec une première couche diélectrique intermédiaire.

7. Gyroscope de résonateur à bague (100) selon la revendication 6, dans lequel le dispositif d'espacement (108) est lié à la pluralité d'électrodes (110) et à la bague d'étanchéité (112) avec une deuxième couche diélectrique intermédiaire.

8. Gyroscope de résonateur à bague (100) selon la revendication 7, dans lequel le couvercle inférieur (114) est lié à la pluralité d'électrodes (110) et à la bague d'étanchéité (112) avec une troisième couche diélectrique intermédiaire.

9. Gyroscope de résonateur à bague (100) selon la revendication 8, dans lequel le couvercle inférieur (114) et la troisième couche diélectrique intermédiaire comprennent une pluralité de vias pour le contact électrique avec la pluralité d'électrodes (110).

10. Gyroscope de résonateur à bague (100) selon la revendication 8, dans lequel les première, deuxième et troisième couches diélectriques sont gravées autour du résonateur à bague cylindrique (102) et des parois latérales de la suspension de bague cylindrique (104) pour fournir une liberté mécanique au résonateur à bague cylindrique (102).

11. Gyroscope de résonateur à bague (100) selon la revendication 3, dans lequel la pluralité d'électrodes (110) comprend une ou plusieurs électrodes de commande;
dans lequel les une ou plusieurs électrodes de commande appliquent une force électrostatique sur le résonateur à bague cylindrique (102) à une fréquence de résonance;
dans lequel les une ou plusieurs électrodes de commande appliquent la force électrostatique sur le résonateur à bague cylindrique (102) sur des antinoeuds positifs d'un modèle de vibration du résonateur à bague cylindrique (102) pour entraîner le résonateur à bague (102) en résonance à un mode fondamental.

12. Gyroscope de résonateur à bague (100) selon la revendication 11, dans lequel la pluralité d'électrodes (110) comprend une ou plusieurs électrodes de détection et une ou plusieurs électrodes de force;
dans lequel les une ou plusieurs électrodes de détection sont positionnées sur les noeuds positifs du modèle de vibration du résonateur à bague cylindrique (102);
dans lequel les une ou plusieurs électrodes de détection détectent une vibration de force de Coriolis dans des points nodaux du résonateur à bague cylindrique (102);
dans lequel les une ou plusieurs électrodes de force sont positionnées sur les noeuds négatifs du modèle de vibration du résonateur à bague cylindrique (102);
dans lequel les une ou plusieurs électrodes de force reçoivent d'une boucle asservie, une tension qui est proportionnelle à une vitesse angulaire appliquée autour d'un axe d'entrée qui est coaxial par rapport au résonateur à bague cylindrique (102);
dans lequel les une ou plusieurs électrodes de force utilisent la tension pour faire passer par zéro le déplacement à un ou plusieurs noeuds du modèle de vibration.

13. Gyroscope de résonateur à bague (100) selon la revendication 3,
dans lequel les première, deuxième, troisième et quatrième tranches de silicium comprennent des tranches de silicium avec une orientation cristalline « 111 ».

14. Procédé pour fabriquer un gyroscope de résonateur à bague (100) comprenant les étapes consistant à:
graver à l'eau forte un trou cylindrique à travers une première tranche de silicium afin de former un dispositif d'espacement (108);
faire croître une première couche d'oxyde (202, 204) sur une surface de la première tranche de silicium;
lier une deuxième tranche de silicium (102, 110, 112) au-dessous de la première tranche de silicium;
modéliser et graver à travers la deuxième tranche de silicium jusqu'à la première couche d'oxyde (204) de la première tranche de silicium afin de définir une bague d'étanchéité (112), une pluralité d'électrodes de commande/de détection (110), et un résonateur à bague cylindrique (102);
graver à travers la deuxième tranche de silicium en utilisant le trou cylindrique comme un cache;
lier une troisième tranche de silicium (106) au-dessus de la première tranche de silicium;
retirer un oxyde natif des deuxième et troisième tranches de silicium qui est exposé dans le trou cylindrique;
**caractérisé par** les étapes consistant à:
déposer une couche de polysilicium épitaxié à l'intérieur du trou cylindrique afin de former une suspension de bague cylindrique (104) dans lequel le résonateur à bague cylindrique est couplé avec un périmètre externe de la suspension de bague cylindrique;
mettre les première, deuxième et troisième tranches de silicium à plat pour retirer la couche de polysilicium épitaxié d'une surface de la troisième tranche de silicium;
retirer le résonateur à bague cylindrique (102) et la paroi latérale de la suspension de bague cylindrique (104) en utilisant une gravure à l'oxyde;
lier une quatrième tranche de silicium (114) au-dessous de la première tranche de silicium,
modéliser et graver une pluralité de vias traversants (116) à travers les troisième et quatrième tranches de silicium pour exposer des zones de contact sur la suspension de bague cylindrique (104) et la pluralité d'électrodes de commande/de détection (110);
déposer une pluralité d'électrodes métalliques (110) afin de former des contacts ohmiques (208) sur la suspension de bague cylindrique et la pluralité d'électrodes de commande/de détection à travers les vias traversants.

15. Procédé selon la revendication 14, dans lequel l'étape consistant à graver le trou cylindrique à travers la première tranche de silicium comprend l'étape consistant à:
graver le trou cylindrique à l'aide d'un procédé de gravure par réaction profonde par ions réactifs.

16. Procédé selon la revendication 14, dans lequel l'étape consistant à déposer la couche de polysilicium épitaxié afin de former la suspension de bague cylindrique (104) comprend l'étape consistant à:
déposer la couche de polysilicium épitaxié à l'aide d'un réacteur de silicium épitaxial afin de former la suspension de bague cylindrique (104), dans lequel la couche de polysilicium épitaxié a une épaisseur d'approximativement dix micromètres.

17. Procédé selon la revendication 14, dans lequel l'étape consistant à déposer la pluralité d'électrodes métalliques (110) pour former des contacts ohmiques sur la pluralité d'électrodes de commande/de détection comprend l'étape consistant à:
déposer les électrodes métalliques à l'aide d'un masque perforé et d'un recuit.

18. Procédé selon la revendication 14, dans lequel la quatrième tranche de silicium comprend une deuxième couche d'oxyde, dans lequel l'étape consistant à modéliser et à graver la pluralité de vias traversants à travers la quatrième tranche de silicium pour exposer les zones de contact sur la pluralité d'électrodes de commande/de détection comprend l'étape consistant à:
modéliser et graver la pluralité de vias traversants à travers les première et quatrième tranches de silicium et la couche d'oxyde externe pour exposer les zones de contact sur la suspension de bague cylindrique (104) et la pluralité d'électrodes de commande/de détection.

19. Procédé selon la revendication 14, dans lequel l'étape consistant à faire croître la première couche d'oxyde sur une surface de la première tranche de silicium comprend l'étape consistant à:
faire croître une couche de deux micromètres d'épaisseur de dioxyde de silicium sur toutes les surfaces de la première tranche de silicium.
